# EUROPÄISCHE PATENTSCHRIFT

(11) **EP 1 639 242 B1**
(45) Veröffentlichungstag und Bekanntmachung des Hinweises auf die Patenterteilung: **09.04.2008**
(21) Anmeldenummer: 04763025.6
(22) Anmeldetag: 25.06.2004
(51) Int. Cl.: F02B 1/12, F02M 45/08, F02B 23/06

(54) **SELBSTZÜNDENDE BRENNKRAFTMASCHINE**
COMPRESSION-IGNITION INTERNAL COMBUSTION ENGINE
MOTEUR A COMBUSTION INTERNE A AUTO-ALLUMAGE

(30) Priorität: 30.06.2003 DE 10329524
(43) Veröffentlichungstag der Anmeldung: 29.03.2006
(73) Patentinhaber: Daimler AG, 70327 Stuttgart (DE)
(72) Erfinder: BLESSING, Matthias, 73663 Berglen (DE); BRAUN, Harald, 73734 Esslingen (DE); KELLER, Frank, 70794 Filderstadt (DE); KÖNIG, Gerhard, 73111 Lauterstein (DE); KRÜGER, Christian, 70597 Stuttgart (DE); RAAB, Alois, 73560 Böbingen (DE)
(86) Internationale Anmeldenummer: PCT/EP2004/006879
(87) Internationale Veröffentlichungsnummer: WO 2005/001255

(56) Entgegenhaltungen:
- EP-A- 1 217 186
- EP-A1- 1 321 662
- WO-A-02/18775
- WO-A-03/052259
- DE-A- 4 210 563
- DE-A- 19 953 932
- US-A- 5 163 621
- US-A1- 2003 094 517
- US-A1- 2003 102 390
- US-B1- 6 513 487
- PATENT ABSTRACTS OF JAPAN Bd. 1997, Nr. 02, 28. Februar 1997 (1997-02-28) -& JP 08 254123 A (MITSUBISHI MOTORS CORP), 1. Oktober 1996 (1996-10-01)

## Beschreibung

Die Erfindung betrifft eine selbstzündende Brennkraftmaschine, bei der Kraftstoff mittels einer Einspritzdüse mit mehreren Einspritzbohrungen in einen Brennraum eingespritzt wird.

Bei direkteinspritzenden Brennkraftmaschinen mit Selbstzündung werden zur Gestaltung einer lastabhängigen Kraftstoffeinspritzung Einspritzdüsen eingesetzt, bei denen die Gestaltung des Einspritzverlaufs durch einen entsprechenden Aufbau der Einspritzdüse gesteuert wird. Hierdurch soll die Gemischaufbereitung im Brennraum und somit die Emissionsbildung im Abgas verbessert werden. Weiterhin kann die Funktionsweise einer nachgeschalteten Abgasnachbehandlung optimiert werden.

Aus der DE 19953932 A1 ist ein Verfahren bekannt, bei dem eine kombinierte homogen/heterogene Betriebsweise eines Verbrennungsmotors für die Erzielung mittlerer und höherer Leistungen vorgeschlagen wird. Dabei sollen mit einer Einspritzstrategie sowohl eine frühe homogene Gemischbildung im Kompressionshub als auch eine darauffolgende heterogene Gemischbildung um den oberen Totpunkt ermöglicht werden, wobei die Kraftstoffeinspritzung bei der homogenen Gemischbildung mit einem geringeren Einspritzdruck als bei der heterogenen Gemischbildung erfolgt, um ein Auftragen von Kraftstoff auf die kalten Brennraumwände zu vermeiden. Es hat sich dennoch gezeigt, dass trotz der oben vorgeschlagenen Maßnahmen weiterhin erhöhte Abgasemissionen auftreten. Es müssen daher weitere Maßnahmen getroffen werden, mit denen die Abgasemissionen minimiert werden. Aus der WO 03/052259 A1 ist eine Kraftstoffeinspritzeinrichtung für eine Brennkraftmaschine bekannt, mittels derer Kraftstoff in Form mehrerer Kraftstoffstrahlen als eine Haupteinspritzung und gegebenenfalls als eine Vor- und/oder Nacheinspritzung in den Brennraum einspritzbar ist. Dabei sind die Einspritzbohrungen einer Einspritzdüse in mindestens zwei unterschiedlichen, getrennt ansteuerbaren Lochreihen angeordnet.

Aus der EP 1 321 662 A1 ist ein Kraftstoffinjektor bekannt, der eine erste Konfiguration der Brennkraftmaschine zum Betrieb mit homogener Selbstentzündung und eine zweite Konfiguration zum Betrieb mit konventioneller Dieseleinspritzung aufweist.

Der Erfindung liegt die Aufgabe zugrunde, eine Brennkraftmaschine mit Selbstzündung bereitzustellen, mit der die Gemischbildung sowie die Verbrennung im Brennraum verbessert werden. Dies wird erfindungsgemäß durch die Merkmale des Anspruchs 1 gelöst.

Die erfindungsgemäße Brennkraftmaschine zeichnet sich dadurch aus, dass Kraftstoff mittels einer eine Düsennadel aufweisenden Einspritzdüse mit mehreren Einspritzbohrungen in einen zwischen einem Kolben und einem Zylinderkopf gebildeten Brennraum in Form mehrerer Kraftstoffstrahlen als eine Haupteinspritzung und gegebenenfalls als eine vor- und/oder Nacheinspritzung eingespritzt wird, wobei die Einspritzbohrungen der Einspritzdüse in mindestens zwei unterschiedlichen, getrennt ansteuerbaren Lochreihen angeordnet sind, und ein Betriebshub der Düsennadel mittels der Steuereinheit in Abhängigkeit von einer Kolbenstellung (ϕ) und/oder von einem Betriebspunkt der Brennkraftmaschine (1) einstellbar ist.

Demnach kann eine gezielte Einspritzung des Kraftstoffes zur Veränderung der Strahllänge im Brennraum in Abhängigkeit von der Kolbenstellung im Zylinder vorgenommen werden, wodurch die Vermischung des eingespritzten Kraftstoffs mit der Brennraumluft insbesondere während der Vor- und Nacheinspritzung vor Erreichen der Zylinderwand stattfindet. Eine Benetzung der Zylinderwand mit Kraftstoff kann hierdurch weitgehend vermieden werden.

Zudem ist ein Betriebshub der Düsennadel der Einspritzdüse derart einstellbar, dass eine instabile kavitierende Strömung in den Einspritzbohrungen der Einspritzdüse gebildet wird. Vorzugsweise wird der Kraftstoff während der Vor- und/oder der Nacheinspritzung in Form von kleinen Teilmengen getaktet vorgenommen. Demnach kann durch die variable Einstellung des Betriebshubs der Düsennadel der Einspritzdüse bei jeder in den Brennraum eingespritzten Teilmenge der Vor- bzw. der Nacheinspritzung die Zerstäubung des jeweiligen Kraftstoffstrahls im Brennraum verstärkt werden, so dass eine Kraftstoffwandanlagerung im Zylinder, die z.B. bei kleinerem Gasdruck und niedrigerer Temperatur im Zylinder stetig steigt, minimiert wird. Somit wird erfindungsgemäß die Reichweite jeder Teilmenge bis zu einer Brennraumwand begrentzt sowie ein verstärktes Aufbrechen und Verdampfen des Einspritzstrahls bzw. der Teilmenge, insbesondere mit zunehmend späterem Einspritzbeginn erzielt.

Gemäß einer Ausgestaltung der Erfindung weisen die Lochreihen der Einspritzdüse unterschiedliche Spritzlochkegelwinkel auf. Dadurch kann der Kraftstoff, insbesondere bei einer Vor- bzw. bei einer Nacheinspritzung unter einem steileren Einspritzwinkel als während der Haupteinspritzung in den Brennraum eingebracht werden. Somit kann die Strahllänge im Brennraum in Abhängigkeit von der Entfernung zwischen der Einspritzdüse und dem Kolben angepasst werden, so dass eine Veränderung der Strahllänge zur Optimierung der Gemischbildung hierdurch gewährleistet bzw. ermöglicht wird.

In einer weiteren Ausgestaltung der Erfindung sind während der Haupteinspritzung eine erste Lochreihe der Einspritzdüse und während der Vor- und/oder der Nacheinspritzung eine zweite Lochreihe aktiviert, wobei der Spritzlochkegelwinkel der ersten Lochreiche größer ist als der Spritzlochkegelwinkel der zweiten Lochreihe. Dabei wird der Kraftstoff während der Haupteinspritzung um einen oberen Totpunkt mit einem flachen Spritzlochkegelwinkel durch die erste Lochreihe, vorzugsweise zwischen 140° und 160° eingespritzt. Dagegen wird der Kraftstoff bei einer frühen und/oder einer späten Kraftstoffeinspritzung unter einem steilen Einsspritzkegelwinkel, z.B. zwischen 60° und 160°, durch die vorzugsweise unterhalb der ersten Lochreihe angeordnete zweite Lochreihe in den Brennraum eingespritzt. Hierdurch wird im Brennraum eine optimale Strahllänge während eines Einspritzvorgangs ermöglicht. Erfindungsgemäß umfasst ein Einspritzvorgang je nach Betriebspunkt eine Haupteinspritzung und bei Bedarf eine Vor- und/oder einer Nacheinspritzung.

Gemäß einer weiteren Ausgestaltung der Erfindung ist ein Kraftstoffeinspritzdruck in Abhängigkeit von der Kolbenstellung (ϕ) und/oder einem Betriebspunkt einstellbar. Hierdurch kann weiterhin die Strahllänge des in den Brennraum eingebrachten Kraftstoffes beeinflusst werden.

Gemäß einer weiteren Ausgestaltung der Erfindung ist im Brennraum der Brennkraftmaschine eine Drallbewegung einstellbar. Vorzugsweise wird eine erzeugte Kraftstoffwolke eines Kraftstoffstrahls (17) mittels der im Brennraum eingestellten Drallbewegung , insbesondere während einer getaktet vorgenommenen Kraftstoffeinspritzung, versetzt oder seitlich verschoben. Hierdurch kann, z.B. die gebildete Kraftstoffwolke einer Teilmenge bei der Durchdringung des Brennraums, insbesondere in Richtung einer Zylinderwand seitlich verschoben werden. Die Kraftstoffstrahlen bzw. die Kraftstofftröpfchen werden während deren Ausbreitung somit von der Zylinderwand wegbewegt bzw. weiter entfernt, so dass sie sich mit der Brennraumluft insbesondere während der Vor- und Nacheinspritzung vor Erreichen der Zylinderwand vermischen oder verdampfen. Somit wird eine Kraftstoffwandanlagerung im Zylinder weitgehend verhindert. Ist im Brennraum keine Drallbewegung vorhanden, dann breitet sich der Kraftstoffstrahl entlang einer Spritzlochmittelachse aus und trifft die Zylinderwand aufgrund der kurzen Weglänge bis zur Zylinderwand. Weiterhin bilden dabei die vorangehenden bzw. die zuerst aus der Einspritzdüse austretenden Strahlpakete einen Strahlkanal aus, der beschleunigtes Eindringen der nachfolgenden Strahlpakete bzw. Teilmengen durch einen Windschatteneffekt zur Folge hat, sodass in Abwesenheit von einer Drallbewegung im Brennraum ein Auftreffen von Kraftstoff auf die Zylinderwand wahrscheinlicher wird.

In einer Ausgestaltung der Erfindung ist der Betriebshub der Düsennadel derart eingestellt, dass innerhalb der Einspritzdüse ein effektiver Strömungsquerschnitt zwischen der Düsennadel und einem Düsennadelsitz etwa das 0,8 bis 1,2-fache eines effektiven Strömungsquerschnittes der Summe aller Einspritzbohrungen beträgt. Dadurch kann eine gewünschte Drosselwirkung im Sitz der Düsennadel gezielt erreicht werden, die eine instabile kavitierende Strömung in den Einspritzbohrungen der Einspritzdüse bewirkt.

In einer weiteren Ausgestaltung der Erfindung weist der Kolben eine Kolbenmulde auf, die tellerförmig ausgebildet ist, wobei sich ein Vorsprung aus der Mitte der Kolbenmulde in Richtung der Einspritzdüse erstreckt. Durch die tellerartige Grundform treten in der Kolbenmulde keine enge Radien an der Oberfläche oder Querschnittssprünge im Kolbenboden auf, so dass im Betrieb der Brennkraftmaschine, falls auf die Mulde Kraftstofftröpfchen auftreffen, diese schnell verdampfen.

Gemäß einer weiteren Ausgestaltung der Erfindung weist die Kolbenmulde vom Kolbenboden aus zunächst einen flachen Einlauf mit einer geringen Krümmung und ab dem Bereich der maximalen Muldentiefe eine bis in den Kolbenmuldenvorsprung reichende stärkere Krümmung auf. Dies verhindert eine Kraftstoffanlagerung im Bereich des Kolbenbodens und erzielt somit eine Minimierung von Abgasemissionen. Vorzugsweise weist der Kolbenmuldenvorsprung einen Kegelwinkel in einem Bereich von 90° bis 160° auf.

Weitere Vorteile ergeben sich aus der folgenden Zeichnungsbeschreibung. In der Zeichnung sind Ausführungsbeispiele der Erfindung dargestellt. Es zeigen:
- Fig. 1: einen schematischen Querschnitt durch eine Brennkraftmaschine mit Selbstzündung,
- Fig. 2: einen schematischen Querschnitt durch eine Einspritzdüse mit zwei unterschiedlich ansteuerbaren Lochreihen mit unterschiedlichen Spritzlochkegelwinkeln,
- Fig. 3: eine schematische Darstellung von eingespritzten Kraftstoffstrahlen durch eine Einspritzdüse nach Fig. 2,
- Fig. 4: eine schematische Anordnung der Einspritzdüse nach Fig. 2 oberhalb einer Kolbenmulde der Brennkraftmaschine gemäß Fig. 1,
- Fig. 5: eine schematische Darstellung einer Querschnittsansicht der Kolbenmulde gemäß Fig. 4,
- Fig. 6: eine schematische Darstellung von getakteten Einspritzstrahlen mit und ohne Drall,
- Fig. 7: ein Diagramm zum Verlauf der getakteten Kraftstoffeinspritzung nach Fig. 6,
- Fig. 8: eine schematische Darstellung einer Drosselwirkung im Düsenloch einer Mehrlochdüse zur Bildung einer instabilen kavitierenden Strömung,
- Fig. 9: eine schematische Darstellung einer Kraftstoffeinspritzung in den Brennraum der Brennkraftmaschine nach Fig. 1 mit unterschiedlichen Spritzlochkegelwinkeln.

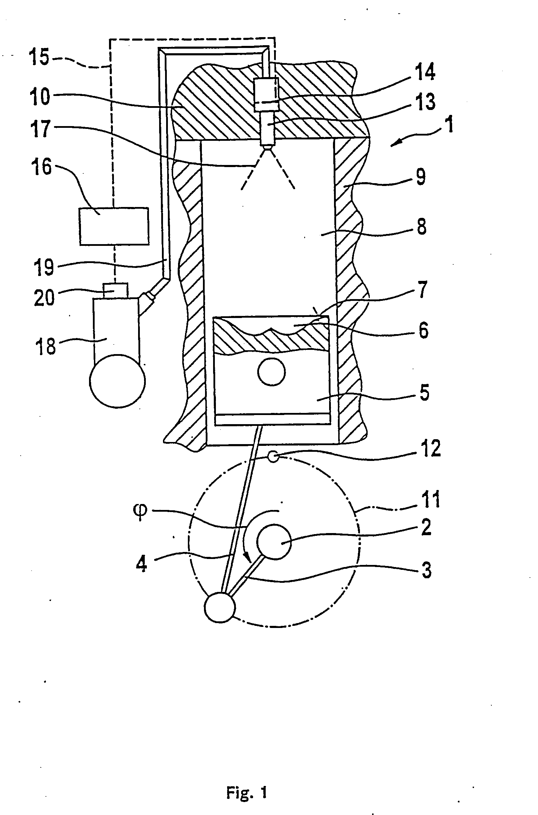

Fig. 1 zeigt eine Brennkraftmaschine 1, bei der eine Kurbelwelle 2 durch einen in einem Zylinder 9 geführten Kolben 5 über eine Pleuelstange 4 angetrieben wird. Zwischen dem Kolben 5 und einem Zylinderkopf 10 wird im Zylinder 9 ein Brennraum 8 gebildet, der eine in den Kolbenboden 7 eingelassene Kolbenmulde 6 umfasst.

Bei der Drehung einer Kurbel 3 der Kurbelwelle 2 auf einem Kurbelkreis 11 im Uhrzeigersinn verkleinert sich der Brennraum 8, wobei die in ihm eingeschlossene Luft verdichtet wird. Der Ladungswechsel im Brennraum 8 erfolgt über nicht dargestellte Gaswechselventile und Gaskanäle im Zylinderkopf 10.

Mit dem Erreichen eines oberen Totpunktes 12 der Kurbel 3, nachfolgend mit OT bezeichnet, ist das Ende der Verdichtung erreicht. Die aktuelle Lage des Kolbens 5 zum Zylinderkopf 10 wird durch den Kurbelwinkel ϕ in Bezug auf den oberen Totpunkt 12 bestimmt.

Eine Einspritzdüse 13 mit mehreren Einspritzbohrungen 21 ist im Zylinderkopf 10 zentral angeordnet. Die Einspritzbohrungen sind jeweils um einen Winkel von 30° bis 80° zur Düsenachse geneigt. Der Spritzlochkegelwinkel beträgt ca. 60° bis 160°, vorzugsweise 80° bis 140°. Es kann sich prinzipiell um eine konventionelle und damit kostengünstige Lochdüse vom Typ Sitzloch, Mini-Sackloch oder Sackloch handeln. Die Einspritzdüse 13 wird über eine Signalleitung 15 und einen Aktuator 14, beispielsweise einen Piezo-Aktuator, von einer elektronischen Steuereinheit 16, der Motorsteuerung, angesteuert. Die aus der Einspritzdüse austretenden Einspritzstrahlen sind mit 17 bezeichnet.

Der Kraftstoff wird von einer Einspritzpumpe 18 in mehreren Druckstufen zur Verfügung gestellt, wobei ein Steuerventil 20, zweckmäßigerweise ein elektronisch ansteuerbares Magnetventil, den jeweiligen maximalen Druck in der Kraftstoffleitung 19 begrenzt. Bevorzugt wird mittels eines geeigneten Einspritzsystems der Einspritzdruck angepasst. Dabei kann ein nadelhubgesteuertes Einspritzsystem mit einer entsprechenden Druckmodulation verwendet werden.

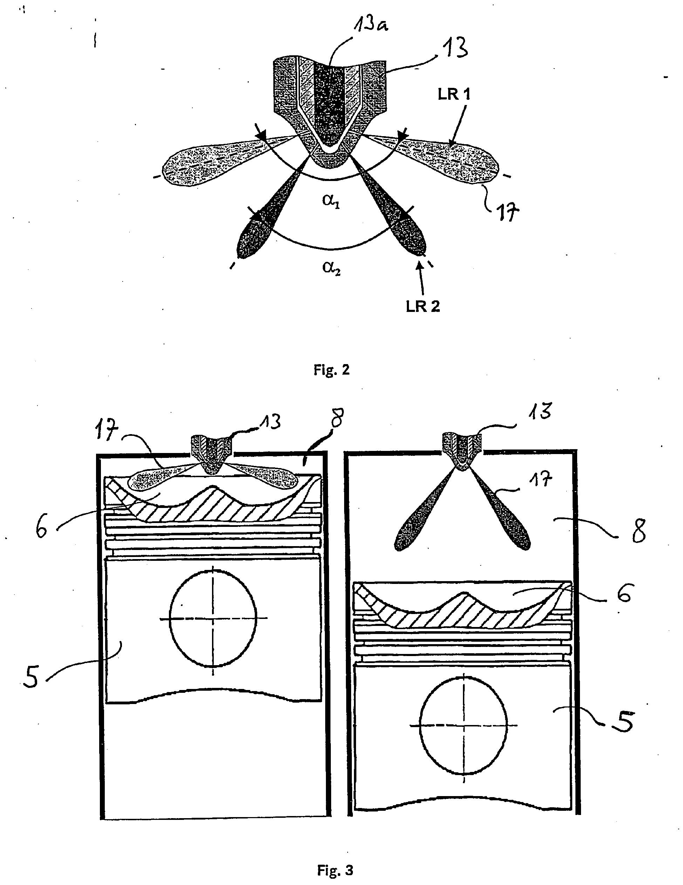

Erfindungsgemäß weist die Einspritzdüse 13 vier bis vierzehn Einspritzbohrungen 21 auf, welche vorzugsweise in einer oder zwei Lochreihen über dem Umfang verteilt angeordnet sind. Vorzugsweise ist die Einspritzdüse 13 als eine innenöffnende Koaxial-Variodüse ausgebildet, die zwei unterschiedlich ansteuerbare Lochreihen L_{R1} und L_{R2} aufweist. Vorzugsweise wird eine Einspritzdüse verwendet, welche mit variabel schaltbaren Einspritzlochreihen gemäß Fig. 2 als eine Koaxial-Variodüse der Firma Bosch in Verbindung mit einer direkten Piezoansteuerung ausgebildet ist.

Die erste Lochreihe L_{R1} weist vorzugsweise einen Spritzlochkegelwinkel α₁ zwischen 140° und 180° auf. Die dient zur Darstellung eines konventionellen Magerbetriebs und ist oberhalb der zweiten Lochreiche L_{R2} gemäß Fig. 2 angeordnet. Die zweite Lochreihe weist einen kleineren Spritzlochkegelwinkel α₂, vorzugsweise zwischen 60° und 140° auf. Sie dient insbesondere zur Gestaltung einer Fettverbrennung mit einer Nacheinspritzung und gegebenenfalls einer Voreinspritzung. Durch die Ansteuerung der zweiten Lochreihe L_{R2} mit dem kleineren Einsspritzkegelwinkel α₂ wird eine freie Strahllänge z.B. bei einer späten Nacheinspritzung, beispielswesie bei 70°KW bis 90°KW nach OT gemäß Fig. 3, rechtes Bild, verlängert. Somit trifft der Kraftstoffstrahl 17 nicht auf die Zylinderwand sondern wird in Richtung der Kolbenmulde 6 bzw. auf den Kolbenboden 7 gerichtet.

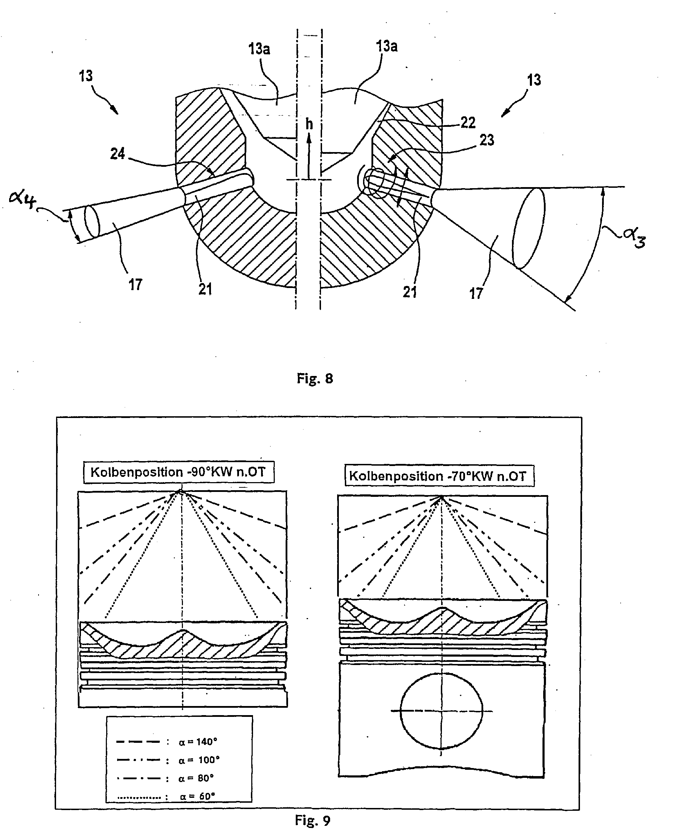

Die Einspritzdüse 13 weist eine in Fig. 8 dargestellte Düsennadel 13a auf, die mit einem nicht dargestellten Steuerelement verbunden ist. Durch die Ansteuerung der Düsennadel 13a durch das Steuerelement wird sie bewegt, um die Einspritzdüse 13 zu öffnen bzw. zu schließen. Dabei wird ein bestimmter Betriebshub h während einer Betriebsstellung betriebspunktabhängig und/oder in Abhängigkeit von dem Kurbelwinkel ϕ eingestellt. Ein Kraftstoffdurchfluss kann dann in Abhängigkeit vom Betriebshub h und einer Öffnungszeit bzw. einer Taktdauer sowie vom eingestellten Kraftstoffeinspritzdruck bestimmt bzw. verändert-werden.

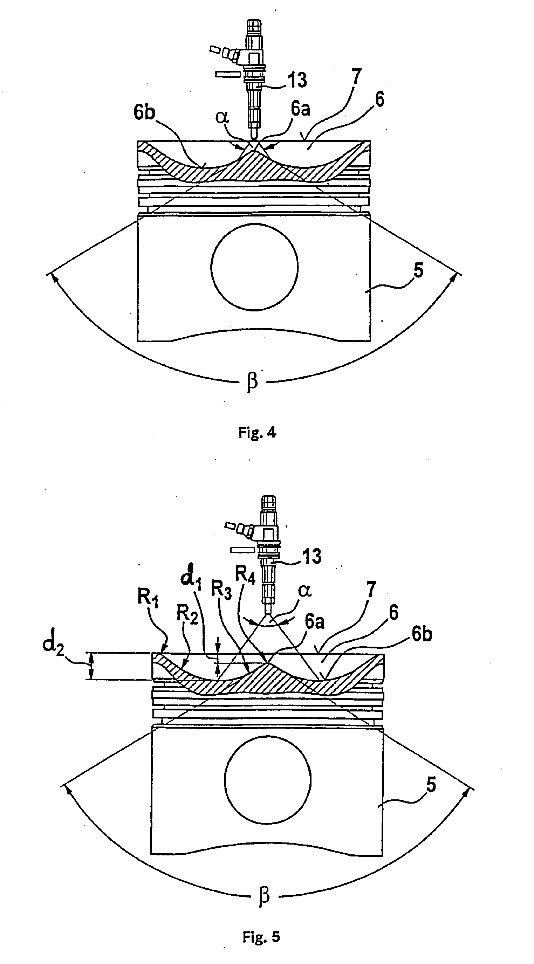

Gemäß Fig. 4 ist die Einspritzdüse 13 oberhalb einer im Kolbenboden 7 eingelassenen Kolbenmulde 6 angeordnet, die im Brennraum 8 der Brennkraftmaschine 1 mittig angeordnet ist. Die Kolbenmulde 6 ist tellerförmig gestaltet, wobei sich in der Mitte der Kolbenmulde 6 ein Vorsprung als eine Kolbenmuldenspitze 6a befindet. Die Kolbenmuldenspitze 6a ist durch einen Muldenboden 6b umrandet, wobei die Muldenspitze 6a in Richtung der Einspritzdüse 13 hinausragt. Durch die tellerförmige Ausbildung der Kolbenmulde 6 ist gewährleistet, dass in einem konventionellen Magerbetrieb mit einer Haupteinspritzung um den oberen Torpunkt OT gemäß Fig. 3, linkes Bild, keine Überfettung des Gemisches in der Kolbenmulde auftritt.

Die Kolbenmulde 6 weist gemäß Fig. 5 am Rand als Übergang zum Kolbenboden 7 einen Radius R1 auf, der bevorzugt zwischen drei und sieben mm beträgt. Die äußeren Bereiche des Muldenbodens 6b sind mit einem Kugelradius R2 zwischen 40 mm und 50 mm ausgebildet. Der Übergang von der Kolbenmuldenspitze 6a zum Kolbenmuldenboden 6b weist eine Krümmung mit einem Radius R3 von etwa 16 bis 24 mm auf. Die Kolbenmuldenspitze 6a befindet sich in etwa gegenüber der Einspritzdüse 13. Die Tiefe der Kolbenmulde 6 nimmt vom Rand der Kolbenmulde 6 bis hin zum Kolbenmuldenboden 6b zu. Die Kolbenmuldenspitze 6a erstreckt sich gegenüber der Einspritzdüse 13 derart, dass sie annähernd unterhalb des Kolbenbodens 7 angeordnet bleibt. Der Abstand d1 zwischen dem oberen Punkt der Kolbenmuldenspitze 6a und dem Kolbenboden beträgt etwa 3 mm bis 10 mm, wobei d1 bevorzugt zwischen 5 mm und 8 mm ausgebildet sein kann. Die Muldenbodentiefe d2 beträgt etwa 15 mm bis 20 mm. Die tellerartige Muldengrundform weist im Randbereich der Kolbenmulde 6 einen abgerundeten Übergang zum Kolbenboden, um Ansammlungen des Kraftstoffs zu vermeiden.

Die Kolbenmuldenspitze 6a ist kegelartig mit einem Muldenkegelwinkel β im Bereich von 90° bis 130° ausgebildet und ist mit einer abgerundeten Spitze mit einem Radius R4 von etwa 3 bis 7 mm ausgeführt. Der Kraftstoffkegelwinkel α und die Lage der Kolbenmuldenspitze 6a wirken derart zusammen, dass die Ausbreitung der Kraftstoffstrahlen durch die Kolbenmuldenspitze 6a nicht gestört wird. Somit ist gewährleistet, dass die Kraftstoffstrahlen annähernd bei jeder Kolbenstellung im Zylinder im Bereich der Kolbenmulde 6 treffen.

Bei der Haupteinspritzung wirkt sich die Kolbenmuldenform sehr vorteilhaft, so dass für die heterogene Verbrennungsphase eine thermische NO-Bildung deutlich vermindert wird, da die Sauerstoffkonzentration durch einen vorangegangenen homogenen Verbrennungsanteil durch die Voreinspritzung reduziert wird. Bei einer späten Kraftstoffnacheinspritzung, z.B. 80° KW nach OT, wird der Kraftstoff unter einem steilen Einspritzwinkel von 60° bis 140° durch die untenliegende Lochreihe L_{R2} in den Brennraum 8 eingebracht, wodurch sich die freie Strahllänge gemäß Fig. 5 und Fig. 3, rechtes Bild, verlängert.

Werden die Vor- und die Nacheinspritzung getaktet vorgenommen, dann wirkt sich die erfindungsgemäße Brennraumkonfiguration, d.h. die Ausgestaltung der Einspritzdüse 13 sowie der Kolbenmuldenform und deren Anordnung im Brennraum 8, zur Verhinderung einer Benetzung der Brennraumwände mit Kraftstoff sehr positiv aus, da die Einspritzdüse 13 im Bereich einer Zylindermittelachse im Zylinderkopf 10 und die im Kolbenboden 7 angeordnete Kolbenmulde 6 gegenüberliegend angeordnet sind.

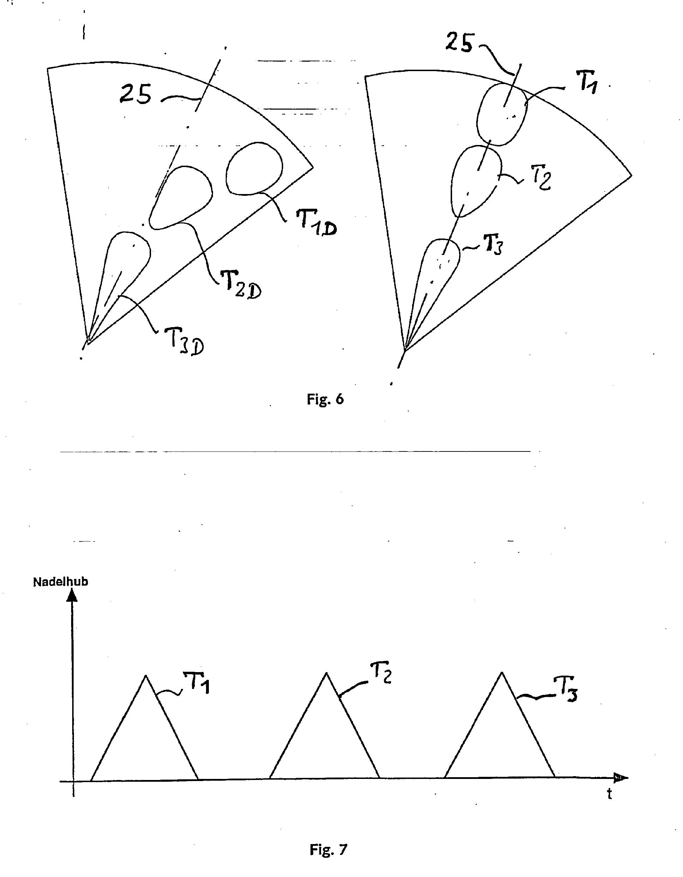

Erfindungsgemäß wird die Bildung einer Drallbewegung im Brennraum 8 als eine weitere Maßnahme zur Reduzierung der Benetzung der Brennraumwände mit Kraftstoff vorgesehen, welche sich insbesondere bei getakteter Kraftstoffeinspritzung bei der vorliegenden Brennraumkonfiguration auf den Betrieb der Brennkraftmaschine positiv auswirkt. Liegt im Brennraum 8 kein Drall vor, dann nehmen die eingespritzten Kraftstoffteilmengen eines Kraftstoffstrahls einen entsprechenden Verlauf gemäß Fig. 6, rechtes Bild, wo ein Sektor des Brennraums 8 schematisch dargestellt ist, in dem sich ein getakteter Einspritzstrahl aus einer Einspritzbohrung entlang einer Spritzloch- bzw. Strahlmittelachse 25 in Richtung der Zylinderwand ausbreitet. Gemäß Fig. 7 ist eine Taktfolge dargestellt, mit der beispielsweise drei Kraftstoffteilmengen T₁, T₂, und T₃ in den Brennraum eingespritzt werden. Erfindungsgemäß kann die Taktung als eine zwei- bis achtfache Taktung vorgenommen werden.

Gemäß Fig. 6, linkes Bild, werden bei getakteter Einspritzung die Flugbahn der einzelnen Kraftstoffteilmengen T_{1D}, T_{2D} und T_{3D} deutlich von der Strahlmittelachse 25 abgelenkt, wenn die Ladungsbewegung im Brennraum 8 einen Drall aufweist. Dagegen treffen gemäß Fig. 6, rechtes Bild, die Kraftstoffteilmengen aufgrund der kürzeren Weglänge zur Zylinderwand auf die Brennraumwand auf. Liegt im Brennraum 8 eine Drallbewegung vor, dann verlängert sich die freie Strahllänge bis zur Zylinderwand im Vergleich zum Verlauf der Flugbahn der einzelnen Kraftstoffteilmengen T₁, T₂ und T₃, rechtes Bild. Eine Kraftstoffwandanlagerung kann dadurch weitgehend vermieden werden.

Dementsprechend ist es zweckmäßig, zusätzlich einen zuschaltbaren variablen Drall im Brennraum 8 der Brennkraftmaschine 1 auszubilden, so dass eine Gemischwolke einer Einspritzteilmenge insbeosnderes bei einer Voreinspritzung und/oder bei einer Nacheinspritzung durch eine angepasste Drallbewegung der Ladung im Brennraum unterstützt und gleichzeitig die Strahleindringtiefe reduziert wird. Die Strahlkeule bzw. die Gemischwolke eines Einspritztaktes wird demnach durch die Drallströmung so weit gedreht, dass bei einem nachfolgenden Einspritztakt die neu gebildeten Strahlkeulen nicht in die Gemischwolke der vorangegangenen Einspritzteilmenge eindringen. Hierdurch werden örtliche Überfettungen sowie die Strahleindringtiefen verringert, wodurch weniger Rußpartikel gebildet werden.

In Fig. 8 ist eine schematische Darstellung der Einspritzdüse 13 vom Typ Sacklochdüse angegeben, wobei sich eine Düse vom Typ Sitzlochdüse verwendet werden kann. In der Einspritzdüse 13 gemäß Fig. 6 ist die Wirkung einer hervorgerufenen instabilen kavitierenden Strömung in einem Düsenloch 21 der Einspritzdüse 13 bei geringem Nadelhub h der Düsennadel 13a, d. h. bei teilweise geöffneter Einspritzdüse 13, und die dadurch erzielte Wirkung auf einen Ausbreitungswinkel α₃ des Einspritzstrahls 17 dargestellt.

Auf der rechten Seite in Fig. 8 ist die Einspritzdüse 13 nur'teilweise geöffnet, wodurch eine Drosselung im Düsennadelsitz 22 erzielt wird. Durch diese Drosselung wird im Düsenloch 21 eine turbulente bzw. eine instabile kavitierende Strömung hervorgerufen, die zu einem großen Ausbreitungswinkel α₃ des Kraftstoffstrahls 17 führt. Im Vergleich zu einer voll geöffneten Einspritzdüse mit maximaler Hubeinstellung, wie auf der linken Seite der Fig. 8 dargestellt, ist der Ausbreitungswinkel α₃ durch die instabile kavitierende Strömung größer als ein Ausbreitungswinkel α₄, der ohne eine solche Strömung bewirkt wird. Die instabile kavitierende Strömung ruft starke Fluktuationen der Düseninnenströmung 23 hervor, welche beim Kraftstoffaustritt aus dem Düsenloch 21 zu einem verstärkten Kraftstoffstrahlzerfall führen und somit zu einem großen Ausbreitungswinkel α₃.

Der Kraftstoffstrahl mit dem Ausbreitungswinkel α₃ breitet sich im Brennraum mit einer intensiven Zerstäubung aus, und bewirkt somit eine bessere Homogenisierung sowie eine schnelle Kraftstoffverdampfung, so dass mehr Kraftstoff in einer Teilmenge der Voreinspritzung oder der Nacheinspritzung ohne eine nennenswerte Brennraumwandbenetzung eingespritzt werden kann. Dagegen wird bei der Einspritzdüse 13 mit der maximalen Hubeinstellung gemäß der linken Seite in Fig. 8 im inneren des Düsenlochs 21 auf der linken Seite eine zweiphasige Strömung 24 hervorgerufen, welche zu einem konventionellen Kraftstoffzerfall führt. Im Vergleich zu einer teilweise geöffneten Einspritzdüse ist der Ausbreitungswinkel α₄ kleiner als der Ausbreitungswinkel α₃.

Eine gezielte Einstellung einer gewünschten Drosselwirkung im Sitz der Düsennadel kann mit einer geeigneten konstruktiven Maßnahme, z.B. durch einen 2-Federhalter an der Einspritzdüse das Verharren der Düsennadel auf einer Betriebshubstellung, die zwischen der vollständig geschlossenen bzw. geöffneten Position liegt, unterstützt werden. Alternativ kann diese Einstellung über eine mittels Piezostellglied direkt gesteuerte Düsennadel realisiert werden. Durch eine Erzielung einer Drosselwirkung im Einspritzdüsensitz mittels der Einstellung des Betriebshubs h und die betriebspunkt- und/oder kolbenstellungsabhängige Ansteuerung der Lochreihen wird eine Begrenzung bzw. eine Veränderung der Reichweite der einsgespritzten Kraftstoffstrahlen 17 erzielt.

Um einen möglichst großen Ausbreitungswinkel α₃ bei einer teilweise geöffneten Mehrloch-Einspritzdüse zu erzielen, sollte vorzugsweise die Ansteuerung derart erfolgen, dass der effektive Strömungsquerschnitt im Nadelsitz vorzugsweise etwa das 0,8 bis 1,2 -fache eines effektiven Strömungsquerschnittes der Summe aller Querschnitte der Einspritzbohrungen beträgt.

In Fig. 9 ist die Auswirkung einer Wahl kleinerer Spritzlochkegelwinkel, z.B. 60° anstelle 140° dargestellt. Hierdurch wird die freie Strahllänge bei einer späten Nacheinspritzung ,z.B. 70° KW bis 90° KW nach OT verlängert. Der Kraftstoffstrahl wird dann nicht auf die Zylinderwand sondern auf die Kolbenoberfläche bzw. in Richtung der Kolbenmulde gerichtet.

Weitere Maßnahmen zur Optimierung der Gemischbildung beim Betrieb der Brennkraftmaschine 1 können durch eine betriebspunktabhängige Variation einer vorgenommenen Taktung und/oder durch einer Veränderung des Kraftstoffeinspritzdruckes realisiert werden. Beispielsweise wird die Haupteinspritzung in einem Bereich zwischen 10°KW vor OT bis 40°KW nach OT bei einem höheren Einspritzdruck als während der Vor- und der Nacheinspritzung vorgenommen. Dabei wird während der Haupteinspritzung ein größerer Nadelhub h als bei der Voreinspritzung eingestellt. Die Einspritzung einer zusätzlichen Kraftstoffmenge in Form einer Nacheinspritzung kann insbesondere während einer Fettphase mittels einer 2- bis 8-fachen getakteten Einspritzung im Expansionshub während eines Intervalls von ca. 20° bis 150° KW nach OT vorgenommen werden. Die einzelnen Einspritztakte für die Einspritzung werden bezüglich Dauer, Einspritzdruck, Nadelhubverlauf und Wechselwirkung mit der Zylinderinnenströmung so angepasst, dass eine bestmögliche Gemischverteilung erzielt wird. Somit wird ein Kraftstoffauftrag auf die Zylinderwand weitgehend verhindert.

Die Nadelhubeinstellung wird während der Nacheinspritzung unterschiedlich vorgenommen, wobei sie vorzugsweise nachfolgend kleiner eingestellt wird. Dabei wird während der Nacheinspritzung bei veränderlichem Nadelhub ein konstanter Kraftstoffeinspritzdruck eingestellt, der vorzugsweise höher als der während der Voreinspritzung und kleiner als der während der Haupteinspritzung ist. Vorzugsweise wird die Taktung während der Nacheinspritzung derart vorgenommen, dass die erste Kraftstoffteilmenge der Nacheinspritzung größer ist als die nachfolgende Kraftstoffteilmenge.

Es ist zweckmäßig, dass während der Vor- und der Nacheinspritzung unterschiedliche Kraftstoffdruck-Änderungsraten eingestellt werden, da sowohl während der Vor- als auch während der Nacheinspritzung im Brennraum 8 unterschiedliche Verbrennungsreaktionen stattfinden, die ungleiche Brennraumdruck- bzw. Temperaturverläufe hervorrufen. Beispielsweise wird ein kombinierter Homogen/Heterogen-Betrieb der Brennkraftmaschine mit 4-fach getakteter Voreinspritzung und ansteigender Taktdauer bei konstantem Einspritzdruck vorgenommen, bei dem die Düsennadel 13a bei einer unteren Hubstellung verharrt. Die Haupteinspritzung erfolgt dann bei einem erhöhten Einspritzdruck und einem maximal eingestellten Nadelhub h. Eine Nacheinspritzung mit abnehmender Taktdauer bei konstantem Einspritzdruck wird anschließend eingespritzt. Vorzugsweise wird die Taktung während der Nacheinspritzung derart vorgenommen, dass die erste Kraftstoffteilmenge der Nacheinspritzung größer ist als die nachfolgende Kraftstoffteilmenge.

Vorzugsweise beträgt die Gesamteinspritzmenge der Voreinspritzung vorzugsweise, insbesondere bei den o.g. Einspritzstrategien, im unteren Teillastbereich, d.h. bis zu 70% Last, etwa 20% bis 50% der Haupteinspritzmenge und im oberen Lastbereich, d.h. von 70% Last bis zur Vollast, etwa 10% bis 30% der Haupteinspritzmenge. Sie wird dabei so gewählt, dass klopfende Verbrennung sicher vermieden wird. Dieser homogenisierte Kraftstoffanteil verbrennt dann annähernd Ruß- und NOx-frei, erzeugt jedoch bereits einen erheblichen Anteil, der für die NOx-Reduktion am NOx-Speicher-Kat erforderlichen CO-Emission und liefert einen wichtigen Anteil zur Reduzierung des Luftverhältnisses.

Durch die erfindungsgemäße Brennraumkonfiguration in Verbindung mit der erfindungsgemäßen Einspritzdüse wird bei einer frühen bzw. späten Kraftstoffeinbringung eine verstärkte Homogenisierung erzielt, so dass ein Kraftstoffauftrag an der Zylinderwand verhindert werden kann. Gleichzeitig wirkt sich die vorgesehene Brennraumform sehr vorteilhaft auf die heterogene Gemischbildung bei der Haupteinspritzung. Ein kombinierter Homogen/Heterogen-Betrieb innerhalb eines Arbeitspiels kann hierdurch mit einer konventionellen Mehrlochdüse gestaltet werden.

Die vorliegende Brennkraftmaschine 1 eignet sich insbesondere für ein kombiniertes homogen/heterogenes Brennverfahren mit Selbstzündung, so dass eine konventionelle Magerverbrennung, bekannt aus Dieselmotoren, sowie eine Fettverbrennung zur Optimierung einer nachgeschalteten Abgasnachbehandlungsanlage, die insbesondere für magerbetriebene Brennkraftmaschinen ausgelegt ist, durchgeführt werden kann. Die Brennkraftmaschine 1 wird üblicherweise weitgehend in einem Magerbetrieb und bei Bedarf zur Optimierung der nachgeschalteten Abgasreinigungsanlage in einem Fettbetrieb gefahren. Sowohl im Magerbetrieb als auch im Fettbetrieb der Brennkraftmaschine 1 kann die einzubringende Kraftstoffmenge durch eine betriebspunktabhängige Aufteilung als eine Vor- Haupt- und Nacheinspritzmenge in den Brennraum eingebracht werden. Im Betrieb der Brennkraftmaschine 1 werden Maßnahmen zur Vermeidung der Anlagerung von flüssigem Kraftstoff in Verbindung mit einer nach einer Haupteinspritzung vorgesehenen Nacheinspritzung oder mit einer vor der Haupteinspritzung vorgesehenen Voreinspritzung getroffen, so dass ein frühes Vermischen mit der im Brennraum befindlichen Verbrennungsluft stattfindet. Diese Maßnahmen können einzeln oder miteinander kombiniert vorgenommen werden, so dass jede denkbare Kombination dieser Maßnahmen bei Bedarf gewählt werden kann.

## Patentansprüche

1. Brennkraftmaschine mit
- einer Steuereinheit (16) und einem zwischen einem Kolben (5) und einem Zylinderkopf gebildeten Brennraum (8) und einer Kraftstoffeinspritzvorrichtung mit einer Einspritzdüse (13), welche eine Düsennadel (13a) und mehrere Einspritzbohrungen (21) aufweist, wobei
- mittels der Einspritzdüse (13) Kraftstoff in Form mehrerer Kraftstoffstrahlen (17) als eine Haupteinspritzung und gegebenenfalls als eine Vor- und/oder Nacheinspritzung in den Brennraum (8) eingespritzt wird,
- die Einspritzbohrungen (21) der Einspritzdüse (13) in mindestens zwei unterschiedlichen, getrennt ansteuerbaren Lochreihen angeordnet sind, und
- ein Betriebshub der Düsennadel (13a) mittels der Steuereinheit in Abhängigkeit von einer Kolbenstellung (ϕ) und/oder von einem Betriebspunkt der Brennkraftmaschine (1) einstellbar ist,
**dadurch gekennzeichnet, dass**
der Betriebshub der Düsennadel (13a) der Einspritzdüse (13) derart einstellbar ist, dass eine instabile kavitierende Strömung in den Einspritzbohrungen (21) der Einspritzdüse (13) gebildet wird.

2. Brennkraftmaschine nach Anspruch 1,
**dadurch gekennzeichnet, dass**
die Lochreihen der Einspritzdüse (13) unterschiedliche Spritzlochkegelwinkel (α) aufweisen.

3. Brennkraftmaschine nach Anspruch 1 oder 2,
**dadurch gekennzeichnet, dass**
während der Haupteinspritzung eine erste Lochreihe (LR₁) der Einspritzdüse (13) und während der Vor- und/oder der Nacheinspritzung eine zweite Lochreihe (LR₂) aktiviert sind, wobei der Spritzlochkegelwinkel (α₁) der ersten Lochreiche (LR₁) größer ist als der Spritzlochkegelwinkel (α₂) der zweiten Lochreihe (LR₂).

4. Brennkraftmaschine nach einem der vorhergehenden Ansprüche, **dadurch gekennzeichnet, dass**
ein Kraftstoffeinspritzdruck in Abhängigkeit von der Kolbenstellung (ϕ) und/oder einem Betriebspunkt einstellbar ist.

5. Brennkraftmaschine nach einem der vorhergehenden Ansprüche, **dadurch gekennzeichnet, dass**
im Brennraum (8) eine Drallbewegung einstellbar ist.

6. Brennkraftmaschine nach einem der vorhergehenden Ansprüche, **dadurch gekennzeichnet, dass**
eine erzeugte Kraftstoffwolke eines Kraftstoffstrahls (17) mittels der im Brennraum (8) eingestellten Drallbewegung ,insbesondere während einer getaktet vorgenommenen Kraftstoffeinspritzung, versetzt oder seitlich verschoben wird.

7. Brennkraftmaschine nach einem der vorhergehenden Ansprüche, **dadurch gekennzeichnet, dass**
der Betriebshub der Düsennadel (13a) der Einspritzdüse (13) derart eingestellt ist, dass innerhalb der Einspritzdüse (13)ein effektiver Strömungsquerschnitt zwischen der Düsennadel (13a) und einem Düsennadelsitz (22) etwa das 0,8 bis 1,2-fache eines effektiven Strömungsquerschnittes der Summe aller Einspritzbohrungen (21) beträgt.

8. Brennkraftmaschine nach einem der vorhergehenden Ansprüche, **dadurch gekennzeichnet, dass**
der Spritzlochkegelwinkel (α) zwischen den eingespritzten Kraftstoffstrahlen (17) zwischen 60° und 160° beträgt.

9. Brennkraftmaschine nach einem der vorhergehenden Ansprüche, **dadurch gekennzeichnet, dass**
der Betriebshub der Düsennadel (13a) mittels einer Zweifederhalterung, einer piezogesteuerten Düsennadel (13a) oder einer Koaxial-Variodüse einstellbar ist.

10. Brennkraftmaschine nach einem der vorhergehenden Ansprüche, **dadurch gekennzeichnet, dass**
der Kolben (5) eine Kolbenmulde (6) aufweist, die tellerförmig ausgebildet ist wobei sich ein Vorsprung (6a) aus der Mitte der Kolbenmulde (6) in Richtung der Einspritzdüse (13) erstreckt.

11. Brennkraftmaschine nach einem der vorhergehenden Ansprüche, **dadurch gekennzeichnet, dass**
die Kolbenmulde (6) vom Kolbenboden (7) aus zunächst einen flachen Einlauf mit einer geringen Krümmung und ab dem Bereich der maximalen Muldentiefe eine bis in den Kolbenmuldenvorsprung (6a) reichende stärkere Krümmung aufweist.

12. Brennkraftmaschine nach einem der vorhergehenden Ansprüche, **dadurch gekennzeichnet, dass**
der Kolbenmuldenvorsprung (6a) einen Kegelwinkel in einem Bereich von 90° bis 140° aufweist.

## Claims

1. Internal combustion engine with
- a control unit (16) and a combustion chamber (8) formed between a piston (5) and a cylinder head, and a fuel injection device with an injection nozzle (13), which has a nozzle needle (13a) and a plurality of injection holes (21), such that
- by means of the injection nozzle (13) fuel in the form of several fuel jets (17) is injected into the combustion chamber (8) as a main injection and if needs be, also as a pre- injection and/or an after- injection,
- the injection holes (21) of the injection nozzle (13) are arranged in at least two different and separately controllable hole series, and
- a working stroke of the nozzle needle (13a) can be adjusted by the control unit as a function of a piston position (φ) and/or of an operating point of the internal combustion engine (1),
**characterised in that**
the working stroke of the nozzle needle (13a) of the injection nozzle (13) can be adjusted in such manner that unstable, cavitational flow is produced in the injection holes (21) of the injection nozzle (13).

2. Internal combustion engine according to Claim 1,
**characterised in that**
the hole series of the injection nozzle (13) have different injection hole cone angles (α).

3. Internal combustion engine according to Claims 1 or 2,
**characterised in that**
during the main injection a first hole series (LR₁) of the injection nozzle (13), and during the pre- injection and/or the after- injection a second hole series LR₂) are activated, the injection hole cone angle (α₁) of the first hole series (LR₁) being larger than the injection hole cone angle (α₂) of the second hole series (LR₂).

4. Internal combustion engine according to any of the preceding claims,
**characterised in that**
a fuel injection pressure can be adjusted as a function of the piston position (φ) and/or of an operating point.

5. Internal combustion engine according to any of the preceding claims,
**characterised in that**
a spiral movement can be produced in the combustion chamber (8).

6. Internal combustion engine according to any of the preceding claims,
**characterised in that**
a fuel cloud from a fuel jet (17) is displaced or moved sideways by virtue of the said spiral movement produced in the combustion chamber (8), particular during a timed fuel injection.

7. Internal combustion engine according to any of the preceding claims,
**characterised in that**
the working stroke of the nozzle needle (13a) of the injection nozzle (13) is adjusted in such manner that within the injection nozzle (13) the effective flow cross-section between the nozzle needle (13a) and a nozzle needle seating (22) is approximately 0.8 to 1.2 times the effective flow cross-section of the sum of all the injection holes (21).

8. Internal combustion engine according to any of the preceding claims,
**characterised in that**
the injection hole cone angle (α) between the injected fuel jets (17) is between 60° and 160°.

9. Internal combustion engine according to any of the preceding claims,
**characterised in that**
the working stroke of the nozzle needle (13a) can be adjusted by means of a double-spring holder, a piezo-controlled nozzle needle (13a), or a coaxial vario-nozzle.

10. Internal combustion engine according to any of the preceding claims,
**characterised in that**
the piston (5) has a piston re-entrant (6) formed in the shape of a dish, and a projection (6a) extends from the centre of the said piston re-entrant (6) in the direction of the injection nozzle (13).

11. Internal combustion engine according to any of the preceding claims,
**characterised in that**
the piston re-entrant (6) has a curvature which, from the surface (7) of the piston, at first curves in gently with a small curvature and then, from the area of maximum re-entrant depth, has a more pronounced curvature as far as the projection (6a) in the piston re-entrant.

12. Internal combustion engine according to any of the preceding claims,
**characterised in that**
the projection (6a) in the re-entrant of the piston has a cone angle in the range from 90° to 140°.

## Revendications

1. Moteur à combustion interne, comprenant :
- une unité de commande (16), une chambre de combustion (8) formée entre un piston (5) et une tête de cylindre, et un dispositif d'injection de carburant comprenant une buse d'injection (13) qui comporte une aiguille de buse (13a) et plusieurs perçages d'injection (21), dans lequel
- au moyen de la buse d'injection (13) du carburant est injecté dans la chambre de combustion (8) sous la forme de plusieurs jets de carburant (17) en tant qu'injection principale et le cas échéant en tant que préinjection et/ou que postinjection,
- les perçages d'injection (21) de la buse d'injection (13) sont agencés en au moins deux rangées de trous différentes, séparément pilotables, et
- une course de fonctionnement de l'aiguille de buse (13a) est réglable au moyen de l'unité de commande en dépendance d'une position (ϕ) du piston et/ou d'un point de fonctionnement du moteur à combustion interne (1),
**caractérisé en ce que**
la course de fonctionnement de l'aiguille de buse (13a) de la buse d'injection (13) est réglable de telle façon qu'il se forme un écoulement instable en cavitation dans les perçages d'injection (21) de la buse d'injection (13).

2. Moteur à combustion interne selon la revendication 1,
**caractérisé en ce que** les trous des rangées de trous de la buse d'injection (13) présentent des angles coniques (α) différents.

3. Moteur à combustion interne selon la revendication 1 ou 2,
**caractérisé en ce que** pendant l'injection principale une première rangée de trous (LR₁) de la buse d'injection (13) est activée, et pendant la préinjection et/ou la postinjection une seconde rangée de trous (LR₂) est activée, l'angle conique (α1) des trous de la première rangée de trous (LR₁) étant supérieur à l'angle conique (α2) des trous de la seconde rangée de trous (LR₂).

4. Moteur à combustion interne selon l'une des revendications précédentes,
**caractérisé en ce que** la pression d'injection du carburant est réglable en fonction de la position du piston (ϕ) et/ou d'un point de fonctionnement.

5. Moteur à combustion interne selon l'une des revendications précédentes,
**caractérisé en ce qu'**un mouvement tourbillonnaire peut être établi dans la chambre de combustion (8).

6. Moteur à combustion interne selon l'une des revendications précédentes,
**caractérisé en ce qu'**une bouffée de carburant générée dans un jet de carburant (17) est décalée ou déportée latéralement au moyen d'un mouvement tourbillonnaire établi dans la chambre de combustion (8), en particulier pendant une injection de carburant exécutée de façon cadencée.

7. Moteur à combustion interne selon l'une des revendications précédentes,
**caractérisé en ce que** la course de fonctionnement de l'aiguille de buse (13a) de la buse d'injection (13) est réglée de telle manière que, à l'intérieur de la buse d'injection (13), une section d'écoulement effective entre l'aiguille de buse (13a) et un siège d'aiguille de buse (22) s'élève environ à 0,8 à 1,2 fois une section d'écoulement effective de la somme de tous les perçages d'injection (21).

8. Moteur à combustion interne selon l'une des revendications précédentes,
**caractérisé en ce que** l'angle conique (α) entre les jets de carburant injectés (17) est entre 60° et 160°.

9. Moteur à combustion interne selon l'une des revendications précédentes,
**caractérisé en ce que** la course de fonctionnement de l'aiguille de buse (13a) est réglable au moyen d'une monture à double ressort, d'une aiguille de buse (13a) à commande piézo-électrique, ou d'une buse variable coaxiale.

10. Moteur à combustion interne selon l'une des revendications précédentes,
**caractérisé en ce que** le piston (5) comprend un creux de piston (6) qui est réalisé en forme de coupelle, une saillie (6a) s'étendant depuis le milieu du creux de piston (6) en direction de la buse d'injection (13).

11. Moteur à combustion interne selon l'une des revendications précédentes,
**caractérisé en ce que** le creux de piston (6), en partant du fond (7) du piston, présente tout d'abord une entrée aplatie avec une faible courbure et, à partir de la zone où la profondeur du creux est maximale, une courbure plus forte qui va jusqu'à la saillie (6a) du creux de piston.

12. Moteur à combustion interne selon l'une des revendications précédentes,
**caractérisé en ce que** la saillie (6a) du creux de piston présente un angle conique dans une plage de 90° à 140°.
